Europäisches Patentamt

European Patent Office

Office européen des brevets

(19)

(11) **EP 0 521 392 B1**

(12) **EUROPEAN PATENT SPECIFICATION**

(45) Date of publication and mention
of the grant of the patent:
**03.11.1999 Bulletin 1999/44**

(51) Int Cl.⁶: **H04N 9/64**, H04N 9/67

(21) Application number: **92110720.7**

(22) Date of filing: **25.06.1992**

(54) **Circuit for converting RGB signals to component signals**

Schaltung zur Umwandlung von RGB-Signalen in Komponentensignale

Circuit pour la conversion des signaux RVB en des signaux composants

(84) Designated Contracting States:
**AT BE CH DE DK ES FR GB IT LI NL PT SE**

(30) Priority: **05.07.1991 EP 91401893**

(43) Date of publication of application:
**07.01.1993 Bulletin 1993/01**

(73) Proprietor: **THOMSON multimedia
92648 Boulogne Cédex (FR)**

(72) Inventor: **Gillies, David
F-67000 Strasbourg (FR)**

(74) Representative:
**Hartnack, Wolfgang, Dipl.-Ing. et al
Deutsche Thomson-Brandt GmbH
Licensing & Intellectual Property,
Karl-Wiechert-Alee 74
30625 Hannover (DE)**

(56) References cited:
**FR-A- 2 535 567          US-A- 4 916 531**

EP 0 521 392 B1

## Description

The present invention relates to a circuit for converting digital RGB signals to digital component signals.

### Background

In "Telefunken Zeitung", Heft 1, 1965, page 51, a circuit for converting analogue RGB signals to analogue YIQ signals is shown.
FR-A-2 535 567 discloses circuitry for combining $1/(2^n)$ fractions of a digital signal, n being an integer number.

### Invention

It is one object of the invention to disclose a circuit for inserting text signals into digital component signals. This object is achieved by the circuit disclosed in claim 1.
In principle the invention consists in converting RGB signals to component signals, whereby said RGB signals are considered to be one bit digital signals, e.g. text signals, and are converted by latching to a luminance component signal and by inverting, adding and/or subtracting to a first and to a second colour component signal, and whereby conversion matrix coefficients are represented by an according power-of-two wiring of latch inputs to said RGB input signals and of the inputs of adding/subtracting means to said RGB input signals and/or to inverted such RGB input signals. Thereby the value "one" may be fed to carry inputs of said adding means.
Advantageous additional embodiments of the inventive circuit are resulting from the respective dependent claims.
In principle the inventive circuit consists in three inverters of one bit RGB input signals, of a latch outputting a luminance component and two adders outputting a first colour component and a second colour component, whereby the value "one" is fed to carry inputs of said adders and matrix coefficients are represented by according wiring of the inputs of said latch to said RGB input signals and of the inputs of said adders to said RGB input signals and to the outputs of said inverters.
Normally text signals are added to component signals in an analogue manner. Special problems may arise in case of up-converting such interlace video signals to a higher field frequency. In case of motion adaptive upconversion vertical unsharpness of the text can be introduced because of different motion velocities of the background of the text.
In the RGB domain text signals can be represented by digital-like amplitude values. Therefore such text signals are generated digitally in the RGB domain and converted digitally to the component domain.
The text signals may stem from teletext signals or on-screen display signals, e.g. a menue-driven user control of a TV set or a VCR.

### Drawing

Preferred embodiments of the invention will now be described with reference to the accompanying drawing, in which:

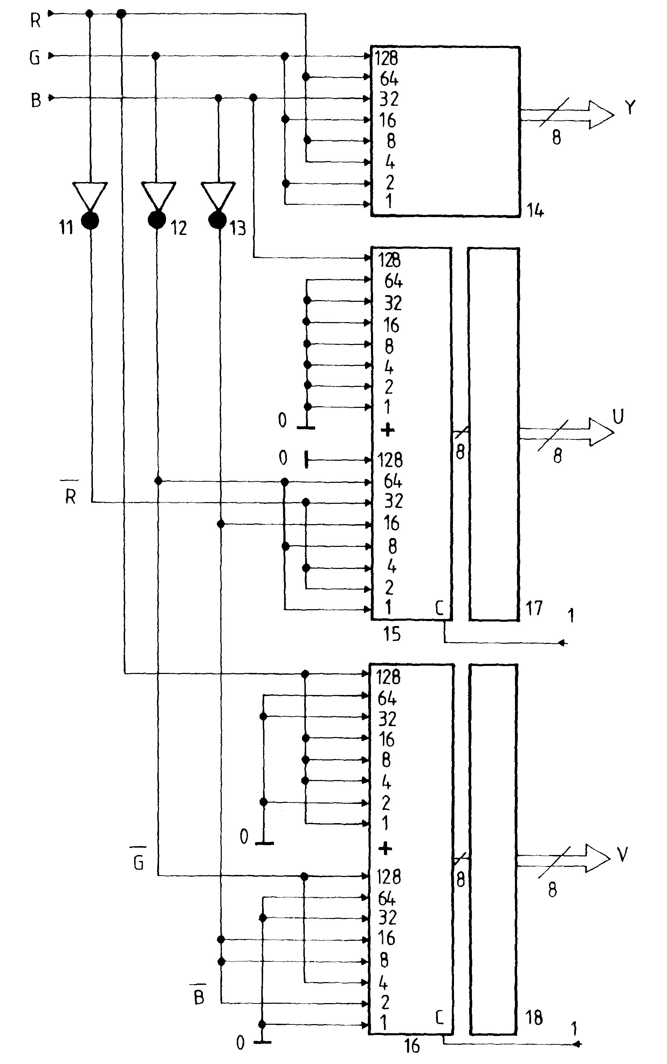

Fig. 1    shows a block diagram of an inventive RGB to YUV matrix for text signals.

### Preferred embodiments

In Fig. 1 input text signals R, G and B, coded as red, green and blue signals are either present or not and can be considered to be one bit digital signals. Therefore the full eight bit range normally used for digital YUV component signals is not required. Only certain discrete values are used. Advantageously a circuit simplification resulting from this effect is possible.
Within the signal format of the corresponding output signals Y, U and V such a simple insertion of one bit signals is not feasible.
The following matrix equations describe the conversion of RGB input signals to YUV component signals (values corresponding to PAL systems):

$$Y = 0.299^*R + 0.587^*G + 0.144^*B$$

$$U = 0.493^*(B\text{-}Y) = \text{-} 0.147^*R \text{-} 0.289^*G + 0.437^*B$$

$$V = 0.877^*(R\text{-}Y) = 0.612^*R \text{-} 0.515^*G \text{-} 0.100^*B$$

If the RGB signal is normalised to a maximum of 1.0, then an eight bit representation of this value corresponds to the value 255. The equivalent eight bit digital coefficients for the above matrix are therefore as follows:

$$Y = 1/256^*( 77^*R + 150^*G + 29^*B)$$

$$U = 1/256^*(\text{-} 38^*R \text{-} 74^*G + 112^*B)$$

$$V = 1/256^*( 157^*R \text{-} 132^*G \text{-} 26^*B)$$

The coefficients are simply realised for the case of Y by inputting the one bit RGB signals to an eight bit latch 14 at the correct power of two to form the eight bit value of the Y component, as shown in the attached block diagram. The coefficients for RGB→Y are formed as the following sums:

$$R = 64 + 8 + 4 = 76 \ (77)$$

$$G = 128 + 16 + 2 + 1 = 147 \ (150)$$

$$B = = 32 \ (29)$$

Note that these do not correspond exactly with the required values, but the error is small enough to be negligible.

In the case of U and V eight bit adders 15, 16 are used to form the subtractions necessary. The RGB signals are being inverted using three inverters 11, 12 and 13.

The value 'one' is added via the adder's 15 and 16 carry inputs C and a two's complement subtraction is performed.

The coefficients for U are formed as follows:

$$R = - 32 - 4 - 2 = - 38 \ (- 38)$$

$$G = - 64 - 8 - 1 = - 73 \ (- 74)$$

$$B = 128 - 16 = 112 \ ( 112)$$

In case of V signals the coefficients are formed as follows:

$$R = 128 + 16 + 8 + 4 + 1 = 157 \ ( 157)$$

$$G = - 128 - 4 = - 132 \ (- 132)$$

$$B = - 16 - 8 - 2 = - 26 \ (- 26)$$

The eight bit adders 15 and 16, respectively, are followed by latches 17 and 18, respectively.

The complete eight bit YUV component signals are therefore formed from the one bit RGB inputs and can be processed later using the same circuitry as any subsequent digital video processing.

By using respective coefficients, i.e. wiring, also the conversion from RGB signals to other than YUV signal formats is possible, e.g. YIQ format.

Also a simple mixing of text signals can be performed by OR-ing the text signals within the RGB domain.

The following integrated circuits can be used:

| Inverter | 74F04 |
|----------|-------|

(continued)

| Eight bit adder | 2* 74F283 (4 bit adder) |
|-----------------|-------------------------|
| Eight bit latch | 74F574 |

The inventive circuit can easily be modified for digital component signals with other than eight bit resolution.

The advantages of this invention are that the circuitry required is very simple (Three eight bit latches, two adders and three inverters only) and the accuracy of the matrixing to YUV is very high.

**Claims**

1. Circuit for converting RGB signals to multiple-bit component signals, wherein the RGB signals are considered to be one-bit digital signals R, G, and B, e.g. text signals, and comprising:

   - three inverters (11, 12, 13) for inverting said one-bit signals R, G, and B;
   - a first latch (14) outputting a multiple-bit luminance component (Y);
   - a second latch (17) outputting a first multiple-bit chrominance component (U) which receives the output signal of a first multiple-bit adder (15);
   - a third latch (18) outputting a second multiple-bit chrominance component (V) which receives the output signal of a second multiple-bit adder (16),

   wherein the one-bit digital signals R, G, and B are connected in non-inverted form to respective bit inputs of said first latch (14) and are in each case partially connected in non-inverted form to respective bits of a first input and in partially inverted form to respective bits of a second input of said first or second, respectively, multiple-bit adders (15, 16), wherein said respective bits of said multiple-bit component signals and said inversion or non-inversion, respectively, represent the multiplication factors and signs in a corresponding RGB-to-component conversion matrix.

2. Circuit according to claim 1, wherein said multiple-bit luminance component signal (Y) is an eight-bit signal and said conversion matrix factors and signs have the following values:

   R is combined with bits representing 64, 8 and 4;
   G is combined with bits representing 128, 16, 2 and 1;
   B is combined with the bit representing 32.

3. Circuit according to claim 1 or 2, wherein said first multiple-bit colour component signal (U) is an eight-bit signal and said conversion matrix factors and signs have the following values:

inverted R is combined with bits representing 32, 4 and 2;
inverted G is combined with bits representing 64, 8 and 1;
B is combined with the bit representing 128;
inverted B is combined with the bit representing 16.

4. Circuit according to any of claims 1 to 3, wherein said second multiple-bit colour component signal (V) is an eight-bit signal and said conversion matrix factors and signs have the following values:

R is combined with bits representing 128, 16, 8, 4 and 1;
inverted G is combined with bits representing 128 and 4;
inverted B is combined with bits representing 16, 8 and 2.

5. Circuit according to any of claims 1 to 4, wherein the non-inverted and inverted, respectively, bits for the first and second multiple-bit colour component signals are in each case fed to the first and second, respectively, input of multiple-bit adding means (15, 16), wherein the value "one" is fed to carry inputs (C) of said adding means and the adding means carry out a two's complement subtraction the output of which represents said first (U) and second (V), respectively, multiple-bit colour component signal.

**Patentansprüche**

1. Schaltung zur Umwandlung von RGB-Signalen in Mehrfach-Bit-Komponentensignale, wobei die RGB-Signale als digitale Ein-Bit-Signale R-, G- und B-Signale, z.B. Textsignale, betrachtet werden, umfassend:

- drei Inverter (11, 12, 13) zur Umwandlung der Ein-Bit-Signale R, G und B;
- eine erste Latch-Vorrichtung (14), die eine Mehrfach-Bit-Luminanzkomponente (Y) am Ausgang aufweist;
- eine zweite Latch-Vorrichtung (17), die an ihrem Ausgang eine erste Mehrfach-Bit-Chrominanzkomponente (U) aufweist, die das Ausgangssignal einer ersten Mehrfach-Bit-Addierschaltung (15) empfängt;
- eine dritte Latch-Vorrichtung (18), die an ihrem Ausgang eine zweite Mehrfach-Bit-Chrominanzkomponente (V) aufweist, die das Ausgangssignal einer zweiten Mehrfach-Bit-Addierschaltung (16) empfängt;

wobei die digitalen Ein-Bit-Signale R, G und B in nicht invertierter Form entsprechenden Bit-Eingängen der ersten Latch-Vorrichtung (14) zugeführt werden und in jedem Fall teilweise in nicht invertierter Form entsprechenden Bits eines ersten Eingangs und in teilweise invertierter Form entsprechenden Bits eines zweiten Eingangs der ersten bzw. der zweiten Mehrfach-Bit-Addierschaltung (15, 16) zugeführt wird, wobei die entsprechenden Bits der Mehrfach-Bit-Komponentensignale und die Inversion bzw. die Nicht-Inversion die Multiplikationsfaktoren und Vorzeichen in einer entsprechenden RGB-in-Komponenten-Umwandlungs-Matrix darstellen.

2. Schaltung nach Anspruch 1, bei der das Mehrfach-Bit-Luminanz-Komponentensignal (Y) ein Acht-Bit-Signal ist und die Umwandlungs-Matrix-Faktoren und Vorzeichen die folgenden Werte haben:

R ist kombiniert mit Bits, die 64, 8 und 4 darstellen;
G ist kombiniert mit Bits, die 128, 16, 2 und 1 darstellen;
B ist kombiniert mit dem Bit, das 32 darstellt.

3. Schaltung nach Anspruch 1 oder 2, bei der das erste Mehrfach-Bit-Farbkomponentensignal (U) ein Acht-Bit-Signal ist und die Umwandlungs-Matrix-Faktoren und Vorzeichen die folgenden Werte haben:

das invertierte R wird mit Bits kombiniert, die 32, 4 und 2 darstellen;
das invertierte G wird mit Bits kombiniert, die 64, 8 und 1 darstellen;
B wird mit dem Bit kombiniert, das 128 darstellt;
das invertierte B wird mit dem Bit kombiniert, das 16 darstellt.

4. Schaltung nach einem der Ansprüche 1 bis 3, bei der das zweite Mehrfach-Bit-Farbkomponentensignal (V) ein Acht-Bit-Signal ist und die Umwandlungs-Matrix-Faktoren und Vorzeichen die folgenden Werte haben:

R ist kombiniert mit Bits, die 128, 16, 8, 4 und 1 darstellen;
das invertierte G ist kombiniert mit Bits, die 128 und 4 darstellen;
das invertierte B ist kombiniert mit Bits, die 16, 8 und 2 darstellen.

5. Schaltung nach einem der Ansprüche 1 bis 4, bei der die nicht invertierten bzw. die invertierten Bits für die ersten und zweiten Mehrfach-Bit-Farbkomponentensignale in jedem Fall dem ersten bzw. zweiten Eingang der Mehrfach-Bit-Addiermittel (15, 16) zugeführt werden, wobei der Wert "eins" Übertrags-Eingängen (C) der Addiermittel zugeführt wird und die Addiermittel eine Zweier-Komplement-Subtraktion durchführen, deren Ausgang das erste (U) bzw. das zweite (V) Mehrfach-Bit-Farbkomponentensignal darstellt.

## Revendications

1. Circuit de conversion de signaux RVB en signaux de composantes à plusieurs binaires, dans lequel les signaux RVB sont considérés comme étant des signaux numériques à un binaire R, V et B, par ex. des signaux de texte, et comprenant:

    - trois inverseurs (11, 12, 13) pour inverser lesdits signaux à un binaire R, V et B;
    - un premier verrou (14) fournissant en sortie une composante de luminance à plusieurs binaires (Y);
    - un deuxième verrou (17) fournissant en sortie une première composante de chrominance à plusieurs binaires (U) qui reçoit le signal de sortie d'un premier additionneur à plusieurs binaires (15);
    - un troisième verrou (18) fournissant en sortie une deuxième composante de chrominance à plusieurs binaires (V) qui reçoit le signal de sortie d'un deuxième additionneur à plusieurs binaires (16),

    dans lequel les signaux numériques à un binaire R, V et B sont connectés sous une forme non inversée à des entrées de binaires respectives dudit premier verrou (14) et sont, dans chaque cas, partiellement connectés sous une forme non inversée à des binaires respectifs d'une première entrée et sous une forme partiellement inversée à des binaires respectifs d'une deuxième entrée desdits premier ou deuxième, respectivement, additionneurs à plusieurs binaires (15, 16), lesdits binaires respectifs desdits signaux de composantes à plusieurs binaires et lesdites inversion ou non-inversion, respectivement, représentent les facteurs de multiplication et les signes dans une matrice de conversion RVB-composantes correspondante.

2. Circuit selon la revendication 1, dans lequel ledit signal de composante de luminance à plusieurs binaires (Y) est un signal à huit binaires et lesdits facteurs et signes de la matrice de conversion prennent les valeurs suivantes:

    R est combiné à un binaire représentant 64, 8 et 4;
V est combiné à des binaires représentant 128, 16, 2 et 1;
B est combiné à un binaire représentant 32.

3. Circuit selon la revendication 1 ou 2, dans lequel ledit premier signal de composante chromatique à plusieurs binaires (U) est un signal à huit binaires et lesdits facteurs et signes de la matrice de conversion prennent les valeurs suivantes:

    l'inverse de R est combiné à des binaires représentant 32, 4 et 2;
    l'inverse de V est combiné à des binaires représentant 64, 8 et 1;
    B est combiné au binaire représentant 128;
    l'inverse de B est combiné au binaire représentant 16.

4. Circuit selon l'une quelconque des revendications 1 à 3, dans lequel ledit deuxième signal de composante chromatique à plusieurs binaires (V) est un signal à huit binaires et lesdits facteurs et signes de la matrice de conversion prennent les valeurs suivantes:

    R est combiné à des binaires représentant 128, 16, 8, 4 et 1;
    l'inverse de V est combiné à des binaires représentant 128 et 4;
    l'inverse de B est combiné à des binaires représentant 16, 8 et 2.

5. Circuit selon l'une quelconque des revendications 1 à 4, dans lequel les binaires non inversés et inversés, respectivement, pour les premier et deuxième signaux de composante chromatique à plusieurs binaires sont, dans chaque cas, injectés aux première et deuxième, respectivement, entrées de moyens additionneurs à plusieurs binaires (15, 16), la valeur "un" étant injectée aux entrées de report (C) desdits moyens additionneurs et les moyens additionneurs mettant en oeuvre une soustraction par complément à deux dont la sortie représente lesdits premier (U) et deuxième (V), respectivement, signaux de composante chromatique à plusieurs binaires.